# EUROPEAN PATENT SPECIFICATION

(11) **EP 4 329 256 B1**
(45) Date of publication and mention of the grant of the patent: **23.09.2026**
(21) Application number: 22192130.7
(22) Date of filing: 25.08.2022
(51) Int. Cl.: H04L 41/14, H04L 41/147, H04L 41/16, H04L 43/0894, H04L 41/0896

(54) **PREDICTION OF A METRIC OF QUALITY OF A NETWORK**
VORHERSAGE EINER QUALITÄTSMETRIK EINES NETZWERKS
PRÉDICTION D'UNE MESURE DE LA QUALITÉ D'UN RÉSEAU

(43) Date of publication of application: 28.02.2024
(73) Proprietor: Nokia Solutions and Networks Oy, 02610 Espoo (FI)
(72) Inventor: DROOGHAAG, Benoit, Ophain-Bois-Seigneur-Isaac (BE); BOSTOEN, Tom, Antwerp (BE)
(74) Representative: Loyer & Abello

(56) References cited:
- EP-A1- 3 349 395
- US-A1- 2021 218 641
- US-A1- 2022 191 592
- QIAO CHUNYU ET AL: "NEIVA: Environment Identification based Video Bitrate Adaption in Cellular Networks", 2019 IEEE/ACM 27TH INTERNATIONAL SYMPOSIUM ON QUALITY OF SERVICE (IWQOS), ACM, 24 June 2019 (2019-06-24), pages 1 - 10, XP033757332, DOI: 10.1145/3326285.3329038
- MIDOGLU CISE ET AL: "Large scale "speedtest" experimentation in Mobile Broadband Networks", COMPUTER NETWORKS, ELSEVIER, AMSTERDAM, NL, vol. 184, 2 November 2020 (2020-11-02), XP086434124, ISSN: 1389-1286, [retrieved on 20201102], DOI: 10.1016/J.COMNET.2020.107629

## Description

### Field

The disclosure relates to apparatuses and methods for predicting a metric of quality of a network, in particular a telecommunications network.

### Background

Monitoring metrics of a quality of a network, especially a telecommunications network, is a task of the utmost importance in order to ensure customer satisfaction and that the quality of the network is as advertised.

Some metrics cannot be efficiently monitored for every user at the same time. One such metric is a speedtest rate or a speedtest success. A speedtest measures the time it takes to download a certain amount of data from the Internet. Such a measure cannot be conducted on every user of a telecommunications network at the same time, due to a generation of real traffic on the telecommunications network and a risk of saturation.

A solution is to resort to a heuristic approach by ensuring such a level of capacity in the network that most speedtests succeed. However, such an approach results in a waste of capacity and does not even ensure that users receive the appropriate quality of service in some extreme scenarios.

QIAO CHUNYU ET AL: "NEIVA: Environment Identification based Video Bitrate Adaption in Cellular Networks", 2019 IEEE/ACM 27TH INTERNATIONAL SYMPOSIUM ON QUALITY OF SERVICE (IWQOS), ACM, 24 June 2019 (2019-06-24), pages 1-10, XP033757332, DOI: 10.1145/3326285.3329038, discloses a prediction model trained offline with throughput traces collected by using speed tests in a 4G/LTE network. The collected throughput traces are analysed and used to train the prediction model offline, and the prediction model is integrated with an identification classifier as online predictor. The predictor collects network throughput online, the specific environment is inferred by the offline classifier, the corresponding prediction model is selected, and the throughput is predicted by the pre-trained model.

### Summary

In a first aspect, the disclosure provides an apparatus for building a prediction model adapted to predict a value of a metric of a quality of a point-to-multipoint telecommunications network.

The apparatus comprises means for:
- Collecting a plurality of high-paced telemetry traffic measurement values representing traffic rates observed in a shared medium of the point-to-multipoint telecommunications network, wherein the shared medium is shared by a plurality of users of the point-to-multipoint telecommunications network and wherein the high-paced telemetry traffic measurement values represent traffic rates attributed to individual users among the plurality of users,
- Fitting at least one traffic model using the plurality of high-paced telemetry traffic measurement values and computing at least one simulated value of the metric of the quality of the point-to-multipoint telecommunications network using the traffic model and a descriptor of at least one network configuration, wherein the metric of the quality of the point-to-multipoint telecommunications network relates to at least one individual user of the point-to-multipoint telecommunications network, and
- Training a prediction model on a simulated dataset, wherein the simulated dataset comprises the descriptor of at least one network configuration and the at least one simulated value of the metric of the quality of the point-to-multipoint telecommunications network, the prediction model being configured to compute the value of the metric of the quality of the point-to-multipoint telecommunications network.

In a second aspect the disclosure also provides a method for building a prediction model adapted to predict a value of a metric of a quality of a point-to-multipoint telecommunications network, the method comprising the steps of:
- Collecting a plurality of high-paced telemetry traffic measurement values representing traffic rates observed in a shared medium of the point-to-multipoint telecommunications network, wherein the shared medium is shared by a plurality of users of the point-to-multipoint telecommunications network and wherein the high-paced telemetry traffic measurement values represent traffic rates attributed to individual users among the plurality of users,
- Fitting at least one traffic model using the plurality of high-paced telemetry traffic measurement values and computing at least one simulated value of the metric of the quality of the point-to-multipoint telecommunications network using the traffic model and a descriptor of at least one network configuration, wherein the metric of the quality of the point-to-multipoint telecommunications network relates to at least one individual user of the point-to-multipoint telecommunications network,
- Training a prediction model on a simulated dataset, wherein the simulated dataset comprises the descriptor of at least one network configuration and the at least one simulated value of the metric of the quality of the point-to-multipoint telecommunications network, the prediction model being configured to compute the value of the metric of the quality of the point-to-multipoint telecommunications network.

According to embodiments, such an apparatus or a method may comprise one or more of the features below.

In an embodiment, the plurality of high-paced telemetry traffic measurement values is retrieved from a minority of users of the point-to-multipoint telecommunications network.

In an embodiment, the descriptor of at least one network configuration comprises at least one value relating to a dynamic bandwidth management system.

In an embodiment, the at least one simulated value of the metric of the quality of the point-to-multipoint telecommunications network comprises a plurality of simulated values of the metric of the quality of the point-to-multipoint telecommunications network, wherein the metric of the quality of the point-to-multipoint telecommunications network is selected in the group consisting of data rates, latencies and speedtest results.

In an embodiment, the apparatus further comprises means for:
- Extracting a plurality of elementary segments from the plurality of high-paced telemetry traffic measurement values,
- Clustering the plurality of elementary segments into a plurality of clusters of elementary segments, and
- Fitting a plurality of cluster traffic models on the plurality of clusters of elementary segments.
The at least one simulated value of the metric of the quality of the point-to-multipoint telecommunications network may be computed using one or more of the plurality of cluster traffic models and the descriptor of one or more network configurations.

In an embodiment, the at least one traffic model comprises a Discrete Auto Regressive model.

In an embodiment, the at least one network configuration comprises a plurality of network configurations and the at least one simulated value of the metric of the quality of the point-to-multipoint telecommunications network comprises a plurality of simulated values of the metric of the quality of the point-to-multipoint telecommunications network.

In an embodiment, the prediction model comprises a classifier and/or a regression model.

In an embodiment, the prediction model computes a probability of success of a speedtest and/or a speedtest rate.

In an embodiment, the point-to-multipoint telecommunications network is a Passive Optical Network.

According to an embodiment, which is not part of the invention as claimed, an apparatus for building a prediction model adapted to predict a value of a metric of a quality of a point-to-multipoint telecommunications network, comprises:
- Collecting circuitry for collecting a plurality of high-paced telemetry traffic measurement values representing traffic rates observed in a shared medium of the point-to-multipoint telecommunications network, wherein the shared medium is shared by a plurality of users of the point-to-multipoint telecommunications network and wherein the high-paced telemetry traffic measurement values represent traffic rates attributed to individual users among the plurality of users,
- Fitting circuitry for fitting at least one traffic model using the plurality of high-paced telemetry traffic measurement values and computing at least one simulated value of the metric of the quality of the point-to-multipoint telecommunications network using the traffic model and a descriptor of at least one network configuration, wherein the metric of the quality of the point-to-multipoint telecommunications network relates to at least one individual user of the point-to-multipoint telecommunications network, and
- Training circuitry for training a prediction model on a simulated dataset, wherein the simulated dataset comprises the descriptor of at least one network configuration and the at least one simulated value of the metric of the quality of the point-to-multipoint telecommunications network, the prediction model being configured to compute the value of the metric of the quality of the point-to-multipoint telecommunications network.

According to an embodiment which is not part of the invention as claimed, an apparatus for building a prediction model adapted to predict a value of a metric of a quality of a point-to-multipoint telecommunications network, comprises at least one processor; and at least one memory storing instructions that, when executed by the at least one processor, cause the apparatus at least to perform:
- Collecting a plurality of high-paced telemetry traffic measurement values representing traffic rates observed in a shared medium of the point-to-multipoint telecommunications network, wherein the shared medium is shared by a plurality of users of the point-to-multipoint telecommunications network and wherein the high-paced telemetry traffic measurement values represent traffic rates attributed to individual users among the plurality of users,
- Fitting at least one traffic model using the plurality of high-paced telemetry traffic measurement values and computing at least one simulated value of the metric of the quality of the point-to-multipoint telecommunications network using the traffic model and a descriptor of at least one network configuration, wherein the metric of the quality of the point-to-multipoint telecommunications network relates to at least one individual user of the point-to-multipoint telecommunications network, and
- Training a prediction model on a simulated dataset, wherein the simulated dataset comprises the descriptor of at least one network configuration and the at least one simulated value of the metric of the quality of the point-to-multipoint telecommunications network, the prediction model being configured to compute the value of the metric of the quality of the point-to-multipoint telecommunications network.

In some example embodiments, the disclosure also provides an apparatus for predicting a value of a metric of a quality of a point-to-multipoint telecommunications network, the apparatus comprising means for:
- Collecting a real-time telemetry traffic measurement value,
- Using the prediction model built according to the above-mentioned method to predict a value of the metric of the quality of the point-to-multipoint telecommunications network.

In some example embodiments, the disclosure also provides a method for predicting a value of a metric of a quality of a point-to-multipoint telecommunications network, the method comprising the steps of:
- Collecting a real-time telemetry traffic measurement value,
- Using the prediction model built according to the above-mentioned method to predict a value of the metric of the quality of the point-to-multipoint telecommunications network.

In an embodiment which is not part of the invention as claimed, an apparatus for predicting a value of a metric of a quality of a point-to-multipoint telecommunications network, comprises:
- Collecting circuitry for collecting a real-time telemetry traffic measurement value,
- Predicting circuitry for using the prediction model built according to the above-mentioned method to predict a value of the metric of the quality of the point-to-multipoint telecommunications network.

In an embodiment, which is not part of the invention as claimed, an apparatus for predicting a value of a metric of a quality of a point-to-multipoint telecommunications network, comprises at least one processor; and at least one memory storing instructions that, when executed by the at least one processor, cause the apparatus at least to perform:
- collecting a real-time telemetry traffic measurement value,
- using the prediction model built according to the above-mentioned method to predict a value of the metric of the quality of the point-to-multipoint telecommunications network.

### Brief description of the drawings

These and other aspects of the invention will be apparent from and elucidated with reference to example embodiments described hereinafter, by way of example, with reference to the drawings.
FIG. 1 represents a schematic view of a telecommunications network in connection with a remote or cloud infrastructure.
FIG. 2 represents a schematic view of a passive optical network.
FIG. 3 represents a schematic view of a speedtest prediction apparatus according to an embodiment.
FIG. 4 represents a schematic view of a traffic modelling module being used in the speedtest prediction apparatus according to an embodiment.
FIG. 5 represents graphic inputs and outputs of the traffic modelling module according to an embodiment.
FIG. 6 represents a schematic view of a simulation module being used in the speedtest prediction apparatus according to an embodiment.
FIG. 7 represents a schematic view of an inference module of the speedtest prediction apparatus.
FIG. 8 represents a schematic view of the integration of the speedtest prediction apparatus within a network infrastructure according to an alternative embodiment.
FIG. 9 is a functional diagram of a programmed computer in which example embodiments of the invention may be implemented.

### Detailed description of the embodiments

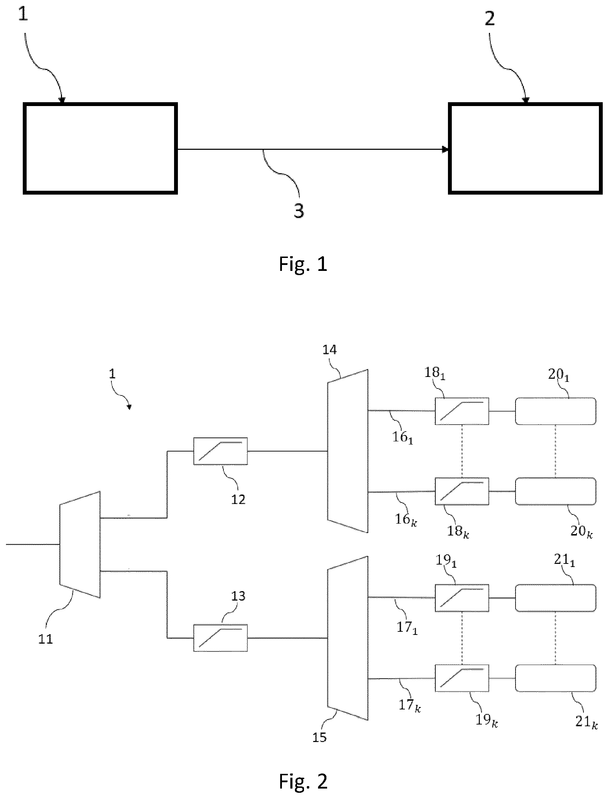

With reference to FIG. 1, a telecommunications network 1 is in communication with a remote infrastructure 2, the remote infrastructure 2 being on-premise or being deployed in a cloud. The telecommunications network 1 transmits a telemetry data stream 3 to the remote infrastructure 2, the telemetry data stream 3 including time series data associated with each user of the telecommunications network 1.

The telemetry data stream 3 may be slow-paced or high-paced. According to one embodiment, the telemetry data stream 3 transmits new data points with a period of five minutes. However, the telemetry data stream 3 may be high-paced and may transmit new data points with a period of five to ten seconds.

The remote infrastructure 2 may process the telemetry data stream 3 in order to estimate or compute one or several metrics pertaining to a quality of service in the telecommunications network 1.

The telecommunications network 1 comprises a shared medium serving a plurality of users. The telecommunications network 1 may be a fiber-optic communication network, a radio network, a coaxial network, a mobile network. The shared medium of the telecommunications network may include an optical fiber, a radio link, a wavelength channel, a frequency channel, a coaxial cable and so on.

With reference to FIG. 2, according to an embodiment, the telecommunications network 1 may be a Passive Optical Network (PON). The Passive Optical Network is considered a "last-mile network" and is tasked with providing a service to users. The Passive Optical Network may contain one or more slices, each of the one or more slices corresponding to a Virtual Network Operator (VNO). According to an embodiment, the telecommunications network 1 comprises a first slice and a second slice.

A PON scheduler 11 distributes a bandwidth between the first slice and the second slice, using static weights or dynamic weights. Dynamic weights may be computed by a Dynamic Bandwidth Management system.

The first slice comprises a first slice traffic shaper 12, the first slice traffic shaper 12 being configured to limit a bitrate in the first slice. A first slice scheduler 14 is configured to distribute the bandwidth between a plurality of first optical connections 16₁, ..., 16*ₖ*.

The plurality of first optical connections 16₁, ..., 16*ₖ* connects the first slice scheduler 14 to a plurality of first endpoints 20₁, ..., 20*ₖ*, wherein each of the plurality of first endpoints 20₁, ..., 20*ₖ* corresponds to a user.

A plurality of first connection traffic shapers 18₁, ..., 18*ₖ* is placed on the plurality of first optical connections 16₁, ..., 16*ₖ*. The plurality of first connection traffic shapers 18₁, ..., 18*ₖ* is configured to set a maximum bitrate to each of the plurality of first optical connections 16₁, ..., 16*ₖ*, the maximum bitrate not being necessarily identical across the plurality of first optical connections 16₁, ..., 16*ₖ*.

The second slice comprises a second slice traffic shaper 13, the second slice traffic shaper 13 being configured to limit a bitrate in the second slice. The second slice scheduler 15 is configured to distribute the bandwidth between a plurality of second optical connections 16₁, ..., 16*ₖ*. A number of second optical connections may or may not be identical to a number of first optical connections.

The plurality of second optical connections 16₁, ..., 16*ₖ* connects the second slice scheduler 15 to a plurality of second endpoints 21₁, ..., 21*ₖ*, wherein each of the plurality of second endpoints 21₁, ..., 21*ₖ* corresponds to a user.

A plurality of second connection traffic shapers 19₁, ..., 19*ₖ* is placed on the plurality of second optical connections 17₁, ..., 17*ₖ*. The plurality of second connection traffic shapers 19₁, ..., 19*ₖ* is configured to set a maximum bitrate to each of the plurality of second optical connections 17₁, ..., 17*ₖ*, the maximum bitrate not being necessarily identical across the plurality of second optical connections 17₁, ..., 17*ₖ*.

The PON scheduler 11, the first slice scheduler 14 and the second slice scheduler 15 may rely on static weights and/or dynamic weights. Dynamic weights may be computed by the Dynamic Bandwidth Management system. The PON scheduler 11, the first slice scheduler 14 and the second slice scheduler 15 may resort to fair-queue algorithms, such as the Generalized Process Sharing Algorithm.

The telecommunications network comprising a shared medium, a metric of quality of service may be measured for individual users of the telecommunications network. The metric of quality of service may be a data rate or a latency for one or more individual users of the telecommunications network, for example.

The metric of quality of service may be measured instantaneously or averaged over a chosen length of time. The metric of quality of service may also be measured for an individual user or averaged over a group of users.

Instead of measuring the metric of quality of service, a prediction model may be used within a prediction apparatus. The prediction apparatus is configured to predict values of the metric of quality of service in real-time for a large number of users at the same time, whereas a measurement of the metric of quality of service is sometimes not scalable.

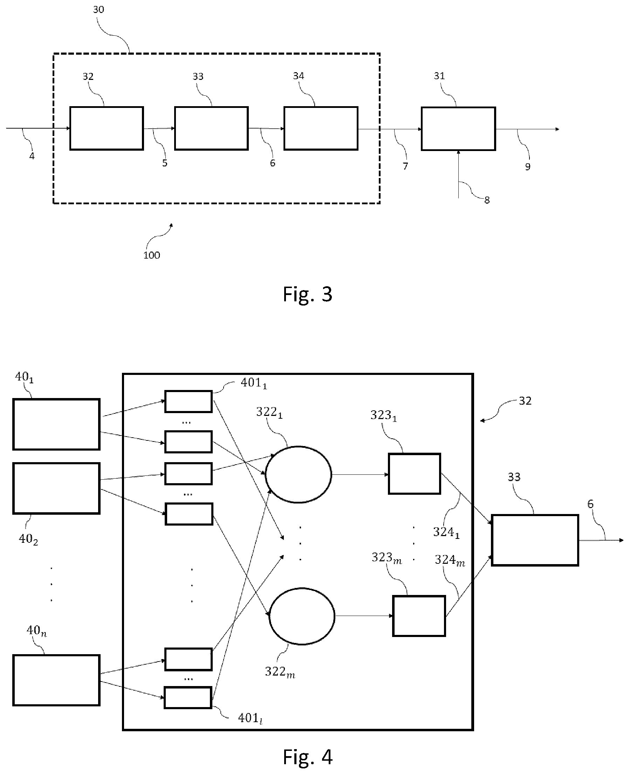

With reference to FIG. 3, a speedtest prediction apparatus 100 is represented.

A speedtest measures a data rate on a connection of an individual user to the telecommunications network by downloading a certain amount of data from a server. The speedtest is deemed successful or not depending on a downloading speed.

Speedtests are a widespread metric of the quality of the connection to the telecommunications network. A common criterion for a satisfying quality of the connection of the telecommunications network overall is if 80% of an advertised datarate is available 80% of the time. Any other percentages may be considered. However, speedtests are not scalable and cannot be carried out on every user of the telecommunications network at the same time. Thus, the speedtest prediction apparatus 100 may help estimate speedtest results for every user of the telecommunications network 1.

The speedtest prediction apparatus 100 comprises a model-building module 30 and an inference module 31. The model-building module 30 may be offline and is configured to train a speedtest prediction model 7. The inference module 31 is an online module and is configured to predict values 9 of a speedtest for a plurality of users, using the speedtest prediction model 7 and a telemetry data stream 8.

The model-building module 30 receives a high-paced telemetry dataset 4. The high-paced telemetry dataset 4 is a set of pre-registered time-series of traffic measurement over time (i.e. bitrates), each of the pre-registered time series corresponding to an individual user among the users.

The pre-registered time series may have different lengths or starting times and may have a duration ranging from a day to approximately a week. The pre-registered time series are sampled with a high frequency. According to an embodiment, a sampling period is five seconds.

The minority of users is chosen to be representative of the entirety of users of the network. This might be made by studying metadata associated with the users. A sample size of the minority of users is chosen so that the high-paced telemetry dataset is statistically significant.

However, the sample size is still very small compared to an overall number of users of the telecommunications network 1. The minority of users may represent from one hundredth to one thousandth of the users of the telecommunications network 1, or from a few hundreds to a few thousand users.

The model-building module 30 comprises a traffic modelling module 32, a simulation module 33 and a training module 34.

The traffic modelling module 32 receives the high-paced telemetry dataset 4 and outputs at least one traffic model 5. The traffic model 5 is a mathematical model fitted on the high-paced telemetry dataset 4.

The traffic modelling module 32 may fit the traffic model 5 to the high-paced telemetry dataset 4 on a Discrete Auto-Regressive model using the Yule-Walker equations. The traffic model 5 may also be fitted on generative models such as auto-encoders or Generative Adversarial Network. Finally, known parametric models may be used, such as Hidden Markov models and Fractional Gaussian Noise models.

The traffic model 5 is then transmitted and integrated into the simulation module 33. The simulation module 33 is configured to generate synthetic data traces using the traffic model 5 and to compute simulated speedtest results under different starting conditions.

A synthetic traffic dataset 6 comprises the simulated speedtest results associated to the different starting conditions. The synthetic traffic dataset 6 is then transmitted to the training module 34.

The training module 34 trains the speedtest prediction model 7 using the synthetic traffic dataset 6, so that the speedtest prediction model 7 learns to predict speedtest values 9 under various starting conditions.

The speedtest prediction model 7 may be a classification model, for example a Support Vector Machine. Alternatively, other classification algorithms may be used in order to classify the speedtest as either a success or a failure. For example, Naïve Bayes, logistic regression or a neural network classifier may be used.

The speedtest prediction model 7 may also be a regression model, for example an isotonic regression. Alternatively, other regression algorithms may be used in order to predict a speedtest rate. For example, a linear regression model, a decision tree regression model or a neural network regression model may be used.

With reference to FIG. 4, an embodiment of the traffic modelling module 32 is represented. According to this embodiment, the traffic modelling module 32 is configured to perform segmentation and clustering of the high-paced telemetry data 4.

In this embodiment, the high-paced telemetry dataset 4 comprises a plurality of high-paced telemetry time-series 40₁, ..., 40*ₙ*. A plurality of elementary segments 401₁, ..., 401, is extracted from the plurality of high-paced telemetry time-series 40₁, ..., 40*ₙ*.

According to an embodiment, the plurality of elementary segments 401₁, ..., 401*ₗ* corresponds to a data consumption profile associated with a certain activity (such as working, streaming, etc.).

The plurality of elementary segments 401₁, ..., 401*ₗ* is collected across the plurality of high-paced telemetry time-series 40₁, ..., 40*ₙ* and may be a subset of the plurality of high-paced telemetry time-series 40₁, ..., 40*ₙ*. A number of elementary segments extracted from each of the plurality of high-paced telemetry time-series 40₁, ..., 40*ₙ* may vary.

The elementary segments all have a same duration (e.g. 15 mins). They are taken over the entire traffic trace excepted when the traffic is very low (typically during the night).

The plurality of elementary segments 401₁, ..., 401*ₗ* is then grouped into a plurality of clusters 322₁, ..., 322*ₘ*. The clusters are chosen using clustering algorithms and usual time-series clustering techniques.

Dimensionality reduction algorithms may be used, for example Principal Components Analysis.

Clustering algorithms may be used, for example K-means, Local Outlier Factor or other usual clustering algorithms adapted for time series. Dynamic time warping or Euclidian matching may be used.

A plurality of elementary traffic model-fitting modules 323₁, ..., 323*ₘ* fits a model on each of the plurality of clusters 322₁, ..., 322*ₘ*. A plurality of elementary traffic models 324₁, ..., 324*ₘ*.is then transmitted to the simulation module 33 for data synthesis, the simulation module 33 outputting the synthetic traffic dataset 6.

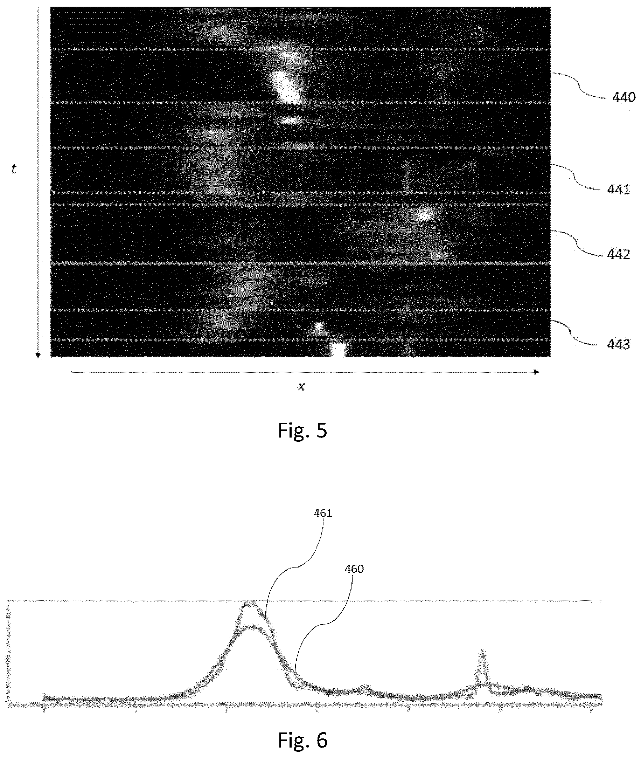

With reference to FIG. 5, an example of a high-paced telemetry traffic trace is shown for an example user for a day. Four clusters 440, 441, 442 and 443 are extracted from the high-paced telemetry traffic trace. x represents the bitrate level and t is the time of the day at which the elementary segments are measured. The grey scale represents the magnitude of the marginal distribution of the bitrate, i.e. how often a bitrate of level x has been measured during the elementary segment capture at time t.

With reference to FIG. 6, a step of model fitting is represented. A measured marginal distribution of traffic level 460 is represented and used to fit a traffic model and generate a simulated distribution of traffic level 461.

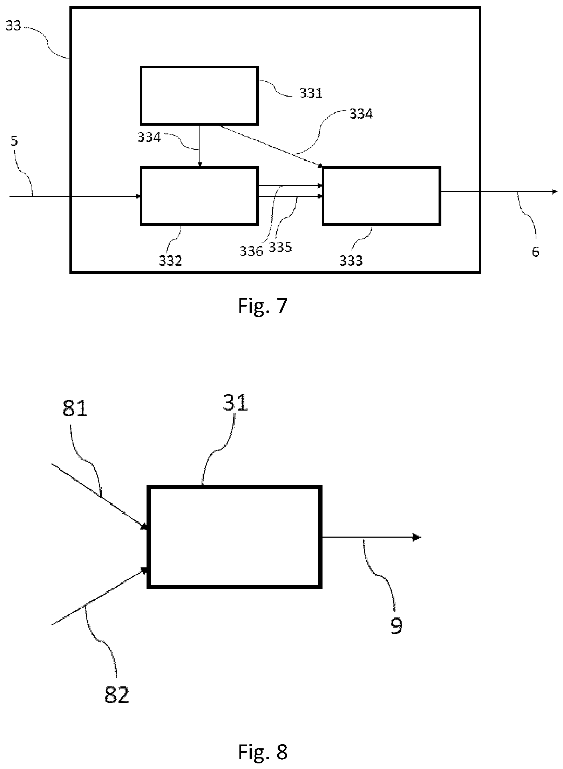

With reference to FIG. 7, the simulation module 33 is described in details. The simulation module 33 receives the traffic model 5 which, according to an embodiment, might be the plurality of elementary traffic models 324₁, ..., 324*ₘ*.

A simulation environment 332 integrates the traffic model 5 and performs a plurality of network simulations, e.g. a very large number of network simulations, which may be hundreds of thousands. An initializing module 331 initializes a set of configuration parameters 334 randomly and transmits the set of configuration parameters 334 to the simulation environment 332.

The set of configuration parameters 334 may comprise:
- A number of slices in the telecommunications network 1,
- A number of users in each of the slices, which may typically range from 1 to 128,
- In an embodiment wherein the traffic model 5 comprises the elementary traffic models 324₁, ..., 324*ₘ*, an association parameter indicating an elementary traffic model for each of the users,
- An average throughput level for each of the subscribers,
- A maximum bitrate for each of the subscriber, the maximum bitrate being configured by traffic shapers placed on optical connections,
- A static weight for each of the subscribers, the static weight being configured by slice schedulers on each of the slices,
- A maximum bitrate for each of the slices, the maximum bitrate being configured by slice traffic shapers placed on each of the slices,
- A static weight for each of the slices, the static weight being configured by a PON scheduler, in an embodiment where the telecommunications network 1 is a Passive Optical Network,
- An optional scheduler weight and/or shaper reduction that would be applied depending on the Dynamic Bandwidth Management system, i.e. scheduler weight limits imposed by the schedulers 11,14 and/or 15 and/or traffic limits imposed by the traffic shapers 12, 13, 18 and/or 19.

The traffic model 5 is used to generate synthetic data for the virtual users in each of the high number of network simulations. The network simulations are transient and high-paced, and have a timestep similar to a period of the high-paced telemetry data, for example, five seconds. The timestep is lower than a typical speedtest duration, the typical speedtest duration being approximately thirty seconds.

For each of the network simulations, a simulated network is initialized. The simulated network may comprise at least one traffic source, at least one traffic shaper and at least one fair queue scheduler, wherein the traffic source generates an in-flow through the simulated network. The simulated network is initialized with the set of configuration parameters 334.

A simulated duration in the simulated network may range from a few minutes to several hours, so that relevant activity patterns may be witnessed. A virtual speedtest user is designated among the virtual users.

According to an embodiment, a plurality of virtual speedtest users is designated at once. According to an embodiment, the virtual speedtest user or the plurality of virtual speedtest users is chosen at random.

Each network simulation generates synthetic high-paced traffic traces for each virtual user and derives simulated speedtest values 335 for each virtual speedtest user. Simulated speedtest values 335 are computed and transmitted to a dataset-building module 333.

The simulation environment 332 also produces a slow-paced telemetry information 336 by performing moving averages on the synthetic high-paced traffic traces generated for each virtual user in each simulation. This telemetry information is similar to the slow-paced telemetry stream 81 that will be fed to the inference module 31. It can either consist of individual traffic streams (one stream per virtual user) or a single aggregated traffic stream (made of the sum of all the virtual users traffic streams in the simulated network).

The dataset-building module 333 receives the simulated speedtest values 335, the slow-paced telemetry information 336 and the set of configuration parameters 334 for a plurality of network simulations and outputs the synthetic traffic dataset 6. The synthetic traffic dataset 6 comprises the configuration parameters 334, simulated speedtest values 335 and slow-paced telemetry information 336 resulting from the network simulations.

According to an embodiment, the dataset-building module 333 outputs a plurality of datasets. For example, the simulated speedtest values may be grouped within a first dataset and the plurality of sets of configuration parameters 334 may be grouped within a second dataset.

With reference to FIG. 8, the inference module 31 is represented. The inference module 31 integrates the speedtest prediction model 7, the speedtest prediction model 7 being trained within the training module 33 using the synthetic traffic dataset 6.

According to an embodiment, the inference module 31 receives a slow-paced telemetry data stream 81 and network data 82. The network data 82 may be provided by a network controller and may comprise a configuration of the network (a number of slices, subscribers, traffic schedulers and traffic shapers), a maximum bitrate per subscriber and a configuration of the Dynamic Bandwidth Management system.

The inference module 31 is configured to predict speedtest values 9 for all users of the telecommunications network 1 without actually performing a speedtest. Predictions are carried out with a period inferior to five minutes. Thus, the network controller may deduce whether the quality of service is satisfactory. The network controller may use the prediction to change a configuration of the Dynamic Bandwidth Management system.

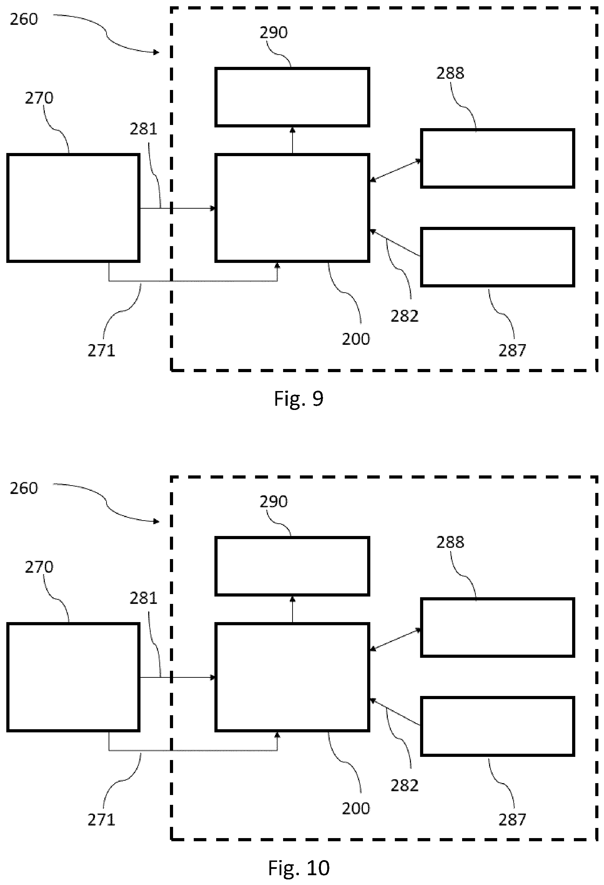

With reference to FIG. 9, an implementation of a speedtest prediction apparatus 200 is represented. The speedtest prediction apparatus 200 is integrated within a network controller 260. The network controller 260 is a software application, deployed either on-premise or in the cloud. According to an embodiment, the network controller 260 may be a Software-Defined-Network (SDN) network controller.

The network controller 260 communicates with an access node 270. The access node 270 is a data communication equipment. According to an embodiment, the access node 270 may be a SDN access node.

The access node 270 retrieves a high-paced telemetry dataset 271 and a slow-paced telemetry data stream 281 from the telecommunications network 1.

The access node 270 transmits the high-paced telemetry dataset 271 and the slow-paced telemetry data stream 281 to the speedtest prediction apparatus 200. The speedtest prediction apparatus 200 comprises a speedtest prediction model, the speedtest prediction model being trained on the high-paced telemetry dataset 271.

The speedtest prediction model, once trained, predicts speedtest values for users of the telecommunications network. The speedtest prediction model takes as input the slow-paced telemetry data stream 281.

The network controller 260 also comprises a network inventory 287 and optionally a Dynamic Bandwidth Management system 288. The network inventory 287 stores network topology data and service-level agreement data. The network topology data and the service-level agreement data may be transmitted to the speedtest prediction apparatus for training and/or inference. The Dynamic Bandwidth Management system 288 may transmit bandwidth management data (such as scheduler weights) to the speedtest prediction apparatus 200.

The speedtest prediction apparatus 200 transmits predictions to a management user interface 290 to display results of the speedtest prediction across the telecommunications network 1 and to change values of parameters of the telecommunications network 1.

The speedtest prediction apparatus 200 may also transmit prediction to the Dynamic Bandwidth Management system 288, so that the Dynamic Bandwidth Management system 288 may update bandwidth management data.

According to another embodiment, represented on FIG. 10, a model-building module 330 is not integrated within a network controller 360. An access node 370 transmits a high-paced telemetry dataset 371 to the model-building module 330.

The model-building module 330 outputs a trained speedtest prediction model 307, the trained speedtest prediction model 307 being then integrated within an inference module 331. The inference module 331 is integrated within the network controller 360.

The access node 370 also transmits a slow-paced telemetry data stream 381 to the inference module 331.

The network controller 360 also comprises a network inventory 387 and optionally a Dynamic Bandwidth Management system 388. The network inventory 387 may transmit network topology data and service-level agreement data to the inference module 331 for inference. The Dynamic Bandwidth Management system 388 may transmit bandwidth management data (such as scheduler weights) to the inference module 331. The inference module 331 may transmit speedtest prediction to a management user interface 390.

The speedtest prediction model 307 may be used as an off-the-shelf solution and may be deployed across several telecommunications networks. The speedtest prediction model 307 may be retrained and fine-tuned for a given network configuration.

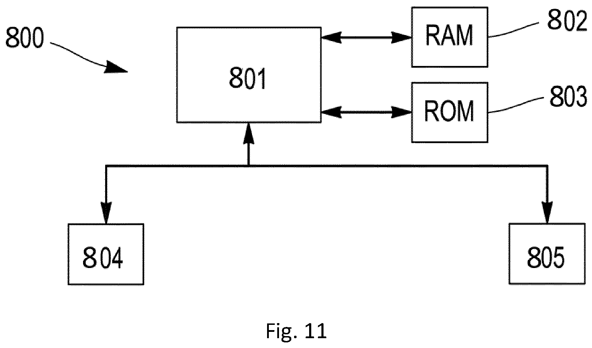

FIG. 11 shows a functional diagram of a programmed computer, server, circuitry, or apparatus 800 that may be used for that purpose. Computer 800 has a core and several peripherals connected via a communication bus. The major components of the core are a microprocessor 801 (often called the CPU) random access memory (RAM) 802 and read only memory (ROM) 803. The peripherals comprise devices that allow information to be input to the system from users, output to users and stored and retrieved (mass storage devices 804 such as hard disks and network interfaces 805).

The invention is not limited to the described example embodiments. The appended claims define the invention in the form of independent claims and advantageous features are defined in the form of dependent claims.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Elements such as the apparatus and its components could be or include e.g. hardware means like e.g. an Application-Specific Integrated Circuit (ASIC), or a combination of hardware and software means, e.g. an ASIC and a Field-Programmable Gate Array (FPGA), or at least one microprocessor and at least one memory with software modules located therein, e.g. a programmed computer.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The example embodiments may be implemented by means of hardware as well as software. The same item of hardware may represent several "means".

In the claims, any reference signs placed between parentheses shall not be construed as limiting the scope of the claims.

## Claims

1. An apparatus (100) for building a prediction model adapted to predict a value of a metric of a quality of a point-to-multipoint telecommunications network, the apparatus comprising means for:
- Collecting a plurality of high-paced telemetry traffic measurement values (4) representing traffic rates observed in a shared medium of the point-to-multipoint telecommunications network (1), wherein the shared medium is shared by a plurality of users of the point-to-multipoint telecommunications network and wherein the high-paced telemetry traffic measurement values represent traffic rates attributed to individual users among the plurality of users,
- Fitting at least one traffic model (5) using the plurality of high-paced telemetry traffic measurement values (4) and computing at least one simulated value of the metric of the quality of the point-to-multipoint telecommunications network using the traffic model (5) and a descriptor (334) of at least one network configuration, wherein the metric of the quality of the point-to-multipoint telecommunications network relates to at least one individual user of the point-to-multipoint telecommunications network,
- Training a prediction model (7) on a simulated dataset (6), wherein the simulated dataset (6) comprises the descriptor of at least one network configuration and the at least one simulated value of the metric of the quality of the point-to-multipoint telecommunications network, the prediction model (7) being configured to compute the value of the metric of the quality of the point-to-multipoint telecommunications network.

2. An apparatus according to claim 1, wherein the plurality of high-paced telemetry traffic measurement values (4) is retrieved from a minority of users of the point-to-multipoint telecommunications network.

3. An apparatus according to claim 1 or 2, wherein the descriptor (334) of at least one network configuration comprises at least one value relating to a dynamic bandwidth management system.

4. An apparatus according to any one of claims 1 to 3, wherein the at least one simulated value of the metric of the quality of the point-to-multipoint telecommunications network comprises a plurality of simulated values of the metric of the quality of the point-to-multipoint telecommunications network, wherein the metric of the quality of the point-to-multipoint telecommunications network is selected in the group consisting of data rates, latencies and speedtest results.

5. An apparatus according to any one of claims 1 to 4, wherein the apparatus further comprises means for:
- Extracting a plurality of elementary segments (401) from the plurality of high-paced telemetry traffic measurement values,
- Clustering the plurality of elementary segments (401) into a plurality of clusters of elementary segments (322),
- Fitting a plurality of cluster traffic models (324) on the plurality of clusters of elementary segments (322),
wherein the at least one simulated value of the metric of the quality of the point-to-multipoint telecommunications network is computed using at least one of the plurality of cluster traffic models and the descriptor of at least one network configuration.

6. An apparatus according to any one of claims 1 to 5, wherein the at least one traffic model (5) comprises a Discrete Auto Regressive model.

7. An apparatus according to any one of claims 1 to 6, wherein the at least one network configuration comprises a plurality of network configurations and the at least one simulated value of the metric of the quality of the point-to-multipoint telecommunications network comprises a plurality of simulated values of the metric of the quality of the point-to-multipoint telecommunications network.

8. An apparatus according to any one of claims 1 to 7, wherein the prediction model (7) comprises a classifier.

9. An apparatus according to any one of claims 1 to 8, wherein the prediction model (7) comprises a regression model.

10. An apparatus according to any one of claims 1 to 9, wherein the point-to-multipoint telecommunications network (1) is a Passive Optical Network.

11. An apparatus according to any one of claims 1 to 10, wherein the prediction model (7) computes a probability of success of a speedtest.

12. An apparatus according to any one of claims 1 to 11, wherein the prediction model (7) computes a speedtest rate.

13. A method for building a prediction model adapted to predict a value of a metric of a quality of a point-to-multipoint telecommunications network, the method comprising the steps of:
- Collecting a plurality of high-paced telemetry traffic measurement values (4) representing traffic rates observed in a shared medium of the point-to-multipoint telecommunications network (1), wherein the shared medium is shared by a plurality of users of the point-to-multipoint telecommunications network and wherein the high-paced telemetry traffic measurement values represent traffic rates attributed to individual users among the plurality of users,
- Fitting at least one traffic model (5) using the plurality of high-paced telemetry traffic measurement values (4) and computing at least one simulated value of the metric of the quality of the point-to-multipoint telecommunications network using the traffic model (5) and a descriptor (334) of at least one network configuration, wherein the metric of the quality of the point-to-multipoint telecommunications network relates to at least one individual user of the point-to-multipoint telecommunications network,
- Training a prediction model (7) on a simulated dataset (6), wherein the simulated dataset (6) comprises the descriptor of at least one network configuration and the at least one simulated value of the metric of the quality of the point-to-multipoint telecommunications network, the prediction model (7) being configured to compute the value of the metric of the quality of the point-to-multipoint telecommunications network.

14. An apparatus (31) for predicting a value of a metric of a quality of a point-to-multipoint telecommunications network, the apparatus comprising means for:
- Collecting a real-time telemetry traffic measurement value (8),
- Using the prediction model (7) built according to the method according to claim 13 to predict a value of the metric of the quality (9) of the point-to-multipoint telecommunications network (1).

15. A method for predicting a value of a metric of a quality of a point-to-multipoint telecommunications network, the method comprising the steps of:
- Collecting a real-time telemetry traffic measurement value (8),
- Using the prediction model (7) built according to the method according to claim 13 to predict a value of the metric of the quality (9) of the point-to-multipoint telecommunications network (1).

## Patentansprüche

1. Vorrichtung (100) zum Aufbau eines Vorhersagemodells, das dazu ausgelegt ist, einen Wert einer Metrik einer Qualität eines Punkt-zu-Mehrpunkt-Telekommunikationsnetzwerks vorherzusagen, wobei die Vorrichtung Mittel umfasst zum:
- Erfassen einer Vielzahl von Hochtakt-Telemetrie-Verkehrsmesswerten (4), die in einem gemeinsam genutzten Medium des Punkt-zu-Mehrpunkt-Telekommunikationsnetzwerks (1) beobachtete Verkehrsraten darstellen, wobei das gemeinsam genutzte Medium von einer Vielzahl von Nutzern des Punkt-zu-Mehrpunkt-Telekommunikationsnetzwerks gemeinsam genutzt wird und wobei die Hochtakt-Telemetrie-Verkehrsmesswerte Verkehrsraten darstellen, die einzelnen Nutzern aus der Vielzahl von Nutzern zugeordnet sind,
- Anpassen mindestens eines Verkehrsmodells (5) unter Verwendung der Vielzahl von Hochtakt-Telemetrie-Verkehrsmesswerten (4) und Berechnen mindestens eines simulierten Werts der Metrik der Qualität des Punkt-zu-Mehrpunkt-Telekommunikationsnetzwerks unter Verwendung des Verkehrsmodells (5) und eines Deskriptors (334) mindestens einer Netzwerkkonfiguration, wobei sich die Metrik der Qualität des Punkt-zu-Mehrpunkt-Telekommunikationsnetzwerks auf mindestens einen einzelnen Nutzer des Punkt-zu-Mehrpunkt-Telekommunikationsnetzwerks bezieht,
- Trainieren eines Vorhersagemodells (7) an einem simulierten Datensatz (6), wobei der simulierte Datensatz (6) den Deskriptor mindestens einer Netzwerkkonfiguration und den mindestens einen simulierten Wert der Metrik der Qualität des Punkt-zu-Mehrpunkt-Telekommunikationsnetzwerks umfasst, wobei das Vorhersagemodell (7) dazu ausgelegt ist, den Wert der Metrik der Qualität des Punkt-zu-Mehrpunkt-Telekommunikationsnetzwerks zu berechnen.

2. Vorrichtung nach Anspruch 1, wobei die Vielzahl von Hochtakt-Telemetrie-Verkehrsmesswerten (4) von einer Minderheit von Nutzern des Punkt-zu-Mehrpunkt-Telekommunikationsnetzwerks abgerufen wird.

3. Vorrichtung nach Anspruch 1 oder 2, wobei der Deskriptor (334) mindestens einer Netzwerkkonfiguration mindestens einen Wert umfasst, der sich auf ein dynamisches Bandbreitenverwaltungssystem bezieht.

4. Vorrichtung nach einem der Ansprüche 1 bis 3, wobei der mindestens eine simulierte Wert der Metrik der Qualität des Punkt-zu-Mehrpunkt-Telekommunikationsnetzwerks eine Vielzahl von simulierten Werten der Metrik der Qualität des Punkt-zu-Mehrpunkt-Telekommunikationsnetzwerks umfasst, wobei die Metrik der Qualität des Punkt-zu-Mehrpunkt-Telekommunikationsnetzwerks aus der Gruppe ausgewählt ist, die aus Datenraten, Latenzen und Geschwindigkeitstestergebnissen besteht.

5. Vorrichtung nach einem der Ansprüche 1 bis 4, wobei die Vorrichtung ferner Mittel umfasst zum:
- Extrahieren einer Vielzahl von Elementarsegmenten (401) aus der Vielzahl von Hochtakt-Telemetrie-Verkehrsmesswerten,
- Clustern der Vielzahl von Elementarsegmenten (401) in eine Vielzahl von Clustern von Elementarsegmenten (322),
- Anpassen einer Vielzahl von Cluster-Verkehrsmodellen (324) an die Vielzahl von Clustern von Elementarsegmenten (322),
wobei der mindestens eine simulierte Wert der Metrik der Qualität des Punkt-zu-Mehrpunkt-Telekommunikationsnetzwerks unter Verwendung mindestens eines der Vielzahl von Cluster-Verkehrsmodellen und des Deskriptors mindestens einer Netzwerkkonfiguration berechnet wird.

6. Vorrichtung nach einem der Ansprüche 1 bis 5, wobei das mindestens eine Verkehrsmodell (5) ein diskretes autoregressives Modell umfasst.

7. Vorrichtung nach einem der Ansprüche 1 bis 6, wobei die mindestens eine Netzwerkkonfiguration eine Vielzahl von Netzwerkkonfigurationen umfasst und der mindestens eine simulierte Wert der Metrik der Qualität des Punkt-zu-Mehrpunkt-Telekommunikationsnetzwerks eine Vielzahl von simulierten Werten der Metrik der Qualität des Punkt-zu-Mehrpunkt-Telekommunikationsnetzwerks umfasst.

8. Vorrichtung nach einem der Ansprüche 1 bis 7, wobei das Vorhersagemodell (7) einen Klassifikator umfasst.

9. Vorrichtung nach einem der Ansprüche 1 bis 8, wobei das Vorhersagemodell (7) ein Regressionsmodell umfasst.

10. Vorrichtung nach einem der Ansprüche 1 bis 9, wobei das Punkt-zu-Mehrpunkt-Telekommunikationsnetzwerk (1) ein passives optisches Netzwerk ist.

11. Vorrichtung nach einem der Ansprüche 1 bis 10, wobei das Vorhersagemodell (7) eine Erfolgswahrscheinlichkeit eines Geschwindigkeitstests berechnet.

12. Vorrichtung nach einem der Ansprüche 1 bis 11, wobei das Vorhersagemodell (7) eine Geschwindigkeitstestrate berechnet.

13. Verfahren zum Aufbau eines Vorhersagemodells, das dazu ausgelegt ist, einen Wert einer Metrik einer Qualität eines Punkt-zu-Mehrpunkt-Telekommunikationsnetzwerks vorherzusagen, wobei das Verfahren die folgenden Schritte umfasst:
- Erfassen einer Vielzahl von Hochtakt-Telemetrie-Verkehrsmesswerten (4), die in einem gemeinsam genutzten Medium des Punkt-zu-Mehrpunkt-Telekommunikationsnetzwerks (1) beobachtete Verkehrsraten darstellen, wobei das gemeinsam genutzte Medium von einer Vielzahl von Nutzern des Punkt-zu-Mehrpunkt-Telekommunikationsnetzwerks gemeinsam genutzt wird und wobei die Hochtakt-Telemetrie-Verkehrsmesswerte Verkehrsraten darstellen, die einzelnen Nutzern aus der Vielzahl von Nutzern zugeordnet sind,
- Anpassen mindestens eines Verkehrsmodells (5) unter Verwendung der Vielzahl von Hochtakt-Telemetrie-Verkehrsmesswerten (4) und Berechnen mindestens eines simulierten Werts der Metrik der Qualität des Punkt-zu-Mehrpunkt-Telekommunikationsnetzwerks unter Verwendung des Verkehrsmodells (5) und eines Deskriptors (334) mindestens einer Netzwerkkonfiguration, wobei sich die Metrik der Qualität des Punkt-zu-Mehrpunkt-Telekommunikationsnetzwerks auf mindestens einen einzelnen Nutzer des Punkt-zu-Mehrpunkt-Telekommunikationsnetzwerks bezieht,
- Trainieren eines Vorhersagemodells (7) an einem simulierten Datensatz (6), wobei der simulierte Datensatz (6) den Deskriptor mindestens einer Netzwerkkonfiguration und den mindestens einen simulierten Wert der Metrik der Qualität des Punkt-zu-Mehrpunkt-Telekommunikationsnetzwerks umfasst, wobei das Vorhersagemodell (7) dazu ausgelegt ist, den Wert der Metrik der Qualität des Punkt-zu-Mehrpunkt-Telekommunikationsnetzwerks zu berechnen.

14. Vorrichtung (31) zum Vorhersagen eines Werts einer Metrik einer Qualität eines Punkt-zu-Mehrpunkt-Telekommunikationsnetzwerks, wobei die Vorrichtung Mittel umfasst zum:
- Erfassen eines Echtzeit-Telemetrie-Verkehrsmesswerts (8),
- Verwenden des gemäß dem Verfahren nach Anspruch 13 aufgebauten Vorhersagemodells (7), um einen Wert der Metrik der Qualität (9) des Punkt-zu-Mehrpunkt-Telekommunikationsnetzwerks (1) vorherzusagen.

15. Verfahren zum Vorhersagen eines Werts einer Metrik einer Qualität eines Punkt-zu-Mehrpunkt-Telekommunikationsnetzwerks, wobei das Verfahren die folgenden Schritte umfasst:
- Erfassen eines Echtzeit-Telemetrie-Verkehrsmesswerts (8),
- Verwenden des gemäß dem Verfahren nach Anspruch 13 aufgebauten Vorhersagemodells (7), um einen Wert der Metrik der Qualität (9) des Punkt-zu-Mehrpunkt-Telekommunikationsnetzwerks (1) vorherzusagen.

## Revendications

1. Appareil (100) pour la construction d'un modèle de prédiction adapté pour prédire une valeur d'une métrique d'une qualité d'un réseau de télécommunications point-multipoint, l'appareil comprenant des moyens pour :
- Collecter une pluralité de valeurs de mesure de trafic de télémétrie à cadence élevée (4) représentant des débits de trafic observés dans un support partagé du réseau de télécommunications point-multipoint (1), dans lequel le support partagé est partagé par une pluralité d'utilisateurs du réseau de télécommunications point-multipoint et dans lequel les valeurs de mesure de trafic de télémétrie à cadence élevée représentent des débits de trafic attribués à des utilisateurs individuels parmi la pluralité d'utilisateurs,
- Ajuster au moins un modèle de trafic (5) en utilisant la pluralité de valeurs de mesure de trafic de télémétrie à cadence élevée (4) et calculer au moins une valeur simulée de la métrique de la qualité du réseau de télécommunications point-multipoint en utilisant le modèle de trafic (5) et un descripteur (334) d'au moins une configuration de réseau, dans lequel la métrique de la qualité du réseau de télécommunications point-multipoint se rapporte à au moins un utilisateur individuel du réseau de télécommunications point-multipoint,
- Entraîner un modèle de prédiction (7) sur un ensemble de données simulées (6), dans lequel l'ensemble de données simulées (6) comprend le descripteur d'au moins une configuration de réseau et l'au moins une valeur simulée de la métrique de la qualité du réseau de télécommunications point-multipoint, le modèle de prédiction (7) étant configuré pour calculer la valeur de la métrique de la qualité du réseau de télécommunications point-multipoint.

2. Appareil selon la revendication 1, dans lequel la pluralité de valeurs de mesure de trafic de télémétrie à cadence élevée (4) est récupérée à partir d'une minorité d'utilisateurs du réseau de télécommunications point-multipoint.

3. Appareil selon la revendication 1 ou 2, dans lequel le descripteur (334) d'au moins une configuration de réseau comprend au moins une valeur relative à un système de gestion dynamique de bande passante.

4. Appareil selon l'une quelconque des revendications 1 à 3, dans lequel l'au moins une valeur simulée de la métrique de la qualité du réseau de télécommunications point-multipoint comprend une pluralité de valeurs simulées de la métrique de la qualité du réseau de télécommunications point-multipoint, dans lequel la métrique de la qualité du réseau de télécommunications point-multipoint est choisie dans le groupe constitué par les débits de données, les latences et les résultats de test de débit.

5. Appareil selon l'une quelconque des revendications 1 à 4, dans lequel l'appareil comprend en outre des moyens pour :
- Extraire une pluralité de segments élémentaires (401) à partir de la pluralité de valeurs de mesure de trafic de télémétrie à cadence élevée,
- Regrouper la pluralité de segments élémentaires (401) en une pluralité de grappes de segments élémentaires (322),
- Ajuster une pluralité de modèles de trafic de grappe (324) sur la pluralité de grappes de segments élémentaires (322),
dans lequel l'au moins une valeur simulée de la métrique de la qualité du réseau de télécommunications point-multipoint est calculée en utilisant au moins l'un de la pluralité de modèles de trafic de grappe et le descripteur d'au moins une configuration de réseau.

6. Appareil selon l'une quelconque des revendications 1 à 5, dans lequel l'au moins un modèle de trafic (5) comprend un modèle Auto-Régressif Discret.

7. Appareil selon l'une quelconque des revendications 1 à 6, dans lequel l'au moins une configuration de réseau comprend une pluralité de configurations de réseau et l'au moins une valeur simulée de la métrique de la qualité du réseau de télécommunications point-multipoint comprend une pluralité de valeurs simulées de la métrique de la qualité du réseau de télécommunications point-multipoint.

8. Appareil selon l'une quelconque des revendications 1 à 7, dans lequel le modèle de prédiction (7) comprend un classificateur.

9. Appareil selon l'une quelconque des revendications 1 à 8, dans lequel le modèle de prédiction (7) comprend un modèle de régression.

10. Appareil selon l'une quelconque des revendications 1 à 9, dans lequel le réseau de télécommunications point-multipoint (1) est un réseau optique passif.

11. Appareil selon l'une quelconque des revendications 1 à 10, dans lequel le modèle de prédiction (7) calcule une probabilité de succès d'un test de débit.

12. Appareil selon l'une quelconque des revendications 1 à 11, dans lequel le modèle de prédiction (7) calcule un débit de test de débit.

13. Procédé pour la construction d'un modèle de prédiction adapté pour prédire une valeur d'une métrique d'une qualité d'un réseau de télécommunications point-multipoint, le procédé comprenant les étapes consistant à :
- Collecter une pluralité de valeurs de mesure de trafic de télémétrie à cadence élevée (4) représentant des débits de trafic observés dans un support partagé du réseau de télécommunications point-multipoint (1), dans lequel le support partagé est partagé par une pluralité d'utilisateurs du réseau de télécommunications point-multipoint et dans lequel les valeurs de mesure de trafic de télémétrie à cadence élevée représentent des débits de trafic attribués à des utilisateurs individuels parmi la pluralité d'utilisateurs,
- Ajuster au moins un modèle de trafic (5) en utilisant la pluralité de valeurs de mesure de trafic de télémétrie à cadence élevée (4) et calculer au moins une valeur simulée de la métrique de la qualité du réseau de télécommunications point-multipoint en utilisant le modèle de trafic (5) et un descripteur (334) d'au moins une configuration de réseau, dans lequel la métrique de la qualité du réseau de télécommunications point-multipoint se rapporte à au moins un utilisateur individuel du réseau de télécommunications point-multipoint,
- Entraîner un modèle de prédiction (7) sur un ensemble de données simulées (6), dans lequel l'ensemble de données simulées (6) comprend le descripteur d'au moins une configuration de réseau et l'au moins une valeur simulée de la métrique de la qualité du réseau de télécommunications point-multipoint, le modèle de prédiction (7) étant configuré pour calculer la valeur de la métrique de la qualité du réseau de télécommunications point-multipoint.

14. Appareil (31) pour prédire une valeur d'une métrique d'une qualité d'un réseau de télécommunications point-multipoint, l'appareil comprenant des moyens pour :
- Collecter une valeur de mesure de trafic de télémétrie en temps réel (8),
- Utiliser le modèle de prédiction (7) construit selon le procédé selon la revendication 13 pour prédire une valeur de la métrique de la qualité (9) du réseau de télécommunications point-multipoint (1).

15. Procédé pour prédire une valeur d'une métrique d'une qualité d'un réseau de télécommunications point-multipoint, le procédé comprenant les étapes consistant à :
- Collecter une valeur de mesure de trafic de télémétrie en temps réel (8),
- Utiliser le modèle de prédiction (7) construit selon le procédé selon la revendication 13 pour prédire une valeur de la métrique de la qualité (9) du réseau de télécommunications point-multipoint (1).
